# EUROPÄISCHE PATENTANMELDUNG

(11) **EP 4 696 561 A1**
(43) Veröffentlichungstag der Anmeldung: **18.02.2026**
(21) Anmeldenummer: 25186247.0
(22) Anmeldetag: 30.06.2025
(51) Int. Cl.: B60R 7/04

(54) **ADAPTER FÜR EIN KRAFTFAHRZEUG**

(30) Priorität: 01.07.2024 DE 202024103584 U; 31.10.2024 DE 202024106250 U
(71) Anmelder: SARP Feinmechanik GmbH, 85659 Forstern-Preisendorf (DE)
(72) Erfinder: SCHWINGHAMMER, Anton, 85659 Forstern-Preisendorf (DE)
(74) Vertreter: Misselhorn, Hein-Martin

(57) **Zusammenfassung**

Die Erfindung betrifft einen Adapter zur bestimmungsgemäßen Anbringung an einem Sitz eines Kraftfahrzeugs, mit einer Halteplatte, wobei an der Halteplatte mindestens eine Befestigungsvorrichtung zum Befestigen eines Gegenstands am Adapter angeordnet ist, **dadurch gekennzeichnet, dass** der Adapter jeweils eine erste Gurtaufnahme und eine zweite Gurtaufnahme umfasst, wobei jeweils eine Gurtaufnahme teilweise den Beckengurtabschnitt und die jeweils andere Gurtaufnahme teilweise den Brustgurtabschnitt eines Kraftfahrzeuggurts aufnimmt.

## Beschreibung

### BEREICH DER ERFINDUNG

Die Erfindung betrifft einen Adapter nach dem Oberbegriff des Anspruchs 1.

### TECHNISCHER HINTERGRUND

Bei der Entwicklung von Kraftfahrzeugen muss bei Testfahrten üblicherweise Messtechnik an Bord des Fahrzeugs transportiert werden. Sehr häufig befindet sich die Messtechnik im Innenraum des Kraftfahrzeugs, um beispielsweise während der Testfahrt Zugriff auf die Messtechnik haben zu können. Damit die Messtechnik während der Fahrt nicht verrutscht, wird die Messtechnik verzurrt.

Ein Verzurren ist ein vergleichsweise langer Vorgang und das Verzurren muss mit höchster Sorgfalt erfolgen, damit die Messtechnik im Fahrbetrieb sicher mit dem Fahrzeug verbunden ist. Problematisch ist, dass nicht überall am Fahrzeug Verzurrösen angebracht sind, sodass das Verzurren unter Umständen nur unter erschwerten Bedingungen möglich ist.

### STAND DER TECHNIK

Eine erste Möglichkeit zur besseren Sicherung der Messtechnik zeigt die DE 20 2019 100 463 U1, die vollumfänglich Teil dieser Anmeldung ist. Doch auch der in dieser Schrift beschriebene Adapter zur Anbringung der Messtechnik weist gewisse Schwächen auf. So kann der Adapter nur auf Rücksitzen angebracht werden und nicht beispielsweise auf dem Beifahrersitz.

### AUFGABE DER ERFINDUNG

Vor diesem Hintergrund ist es Aufgabe der Erfindung, einen Adapter für ein Kraftfahrzeug zur Verfügung zu stellen, welcher mit dem Adapter verbundene Gegenstände, wie beispielsweise Messtechnik, schnell und einfach mit dem Kraftfahrzeug verbindet und dabei unabhängig von vorhandenen Befestigungssystemen im Kraftfahrzeug ist.

### ERFINDUNGSGEMÄSSE LÖSUNG

Eine Lösung dieser Aufgabe wird durch den Hauptanspruch bereitgestellt.

Erfindungsgemäß wird hierzu ein Adapter zur bestimmungsgemäßen Anbringung an einem Sitz eines Kraftfahrzeugs vorgeschlagen. Dieser Adapter weist eine Halteplatte auf, wobei an der Halteplatte mindestens eine Befestigungsvorrichtung zum Befestigen eines Gegenstands am Adapter angeordnet ist. Der Adapter zeichnet sich dadurch aus, dass er jeweils eine erste Gurtaufnahme und eine zweite Gurtaufnahme umfasst, wobei jeweils eine Gurtaufnahme teilweise den Beckengurtabschnitt und die jeweils andere Gurtaufnahme teilweise den Brustgurtabschnitt eines Kraftfahrzeuggurts aufnimmt. Der Kraftfahrzeuggurt ist hierbei bevorzugt ein serienmäßig an einem Kraftfahrzeug vorgesehener Gurt und/oder ein Gurt, welcher bevorzugt für einen durchschnittlichen Mitteleuropäer vorgesehen ist. Der Kraftfahrzeuggurt ist hierbei bevorzugt ein Sicherheitsgurt oder Anschnallgurt mit einer Schlosszunge, einem Gurtschloss und einem Umlenker. Bevorzugt ist der Kraftfahrzeuggurt ein Dreipunktgurt.

Die erste Gurtaufnahme nimmt hierbei bevorzugt teilweise den Beckengurtabschnitt des Kraftfahrzeuggurts auf und die zweite Gurtaufnahme bevorzugt teilweise den Brustgurtabschnitt. Es ist jedoch möglich, wenn auch nicht bevorzugt, dass die erste Gurtaufnahme teilweise den Brustgurtabschnitt aufnimmt und die zweite Gurtaufnahme teilweise den Beckengurtabschnitt. Der Beckengurtabschnitt und der Brustgurtabschnitt sind bevorzugt wie folgt voneinander abzugrenzen: Der Beckengurtabschnitt ist bevorzugt derjenige Abschnitt des Gurts, der zwischen der unteren, festen Verankerung des Gurts - bevorzugt unterhalb der Sitzfläche des Sitzes - bis hin zur Schlosszunge, die im Gurtschloss eingerastet ist, verläuft. Der Brustgurtabschnitt ist derjenige Abschnitt des Gurts, der zwischen der Schlosszunge, die im Gurtschloss eingerastet ist, und dem Umlenker verläuft.

Den Gurt "aufnehmen" in Bezug auf die Gurtaufnahmen meint im Sinne der Erfindung ein zumindest teilweises Führen des Gurtabschnitts, ein zumindest teilweises Umschließen des Gurtabschnitts und/oder ein zumindest teilweises Abstützen des Gurtabschnitts.

Dadurch, dass die zwei Gurtabschnitte an zwei verschiedenen Gurtaufnahmen angebracht werden können, ist es möglich, den Adapter nur mittels des Kraftfahrzeuggurts auf einfache Art und Weise in dem jeweiligen Sitz festzulegen. So ist ein Befestigen des Adapters beispielsweise für eine Testfahrt unabhängig von eventuellen zusätzlichen Befestigungssystemen im Kraftfahrzeug und nur von dem Vorhandensein eines Kraftfahrzeuggurts abhängig. Dieser Kraftfahrzeuggurt ist serienmäßig in den meisten Autos an jedem Sitz vorhanden und ermöglicht so vor allem auch eine Befestigung am Beifahrersitz eines Kraftfahrzeugs, an welchem normalerweise keine zusätzlichen Befestigungssysteme vorhanden sind.

### BEVORZUGTE WEITERBILDUNGSMÖGLICHKEITEN DER ERFINDUNG

Eine bevorzugte Ausführungsform des Adapters besteht darin, dass der Adapter auf seiner der Sitzlehne des Sitzes zugewandten Seite einen Stützbügel zur zusätzlichen Abstützung des Adapters gegen eine Sitzlehne umfasst. Hierdurch erfolgt neben der Fixierung des Adapters durch den Kraftfahrzeuggurt eine zweite, zusätzliche Halterung, welche vor allem eine Rotation des Adapters verhindert.

Zudem ist es besonders bevorzugt, wenn der Stützbügel einen Haltegriff zum Halten des Adapters umfasst. Der Haltegriff erleichtert die Montage und Demontage des Adapters im Fahrzeug und zudem ein Tragen des Adapters.

Darüber hinaus ist es besonders bevorzugt, wenn der Adapter auf seiner der Sitzlehne des Sitzes abgewandten Seite einen Haltebügel zum Halten des Adapters umfasst. Der Haltebügel trägt wiederum zur erleichterten Montage und Demontage des Adapters im Fahrzeug bei und ermöglicht zudem ein Tragen des Adapters, vor allem auch in Kooperation mit dem Haltegriff des Stützbügels.

Des Weiteren ist es besonders bevorzugt, wenn der Haltebügel durch einen Ausschnitt in der Halteplatte gebildet wird. So kann der Haltebügel auf einfache und kostengünstige Art und Weise realisiert werden. Bevorzugt weist die Halteplatte hierfür einen Vorsprung auf der der Sitzlehne
entgegengesetzten Seite auf.

Eine weitere bevorzugte Ausführungsform des Adapters besteht darin, dass eine jeweilige Befestigungsvorrichtung der Halteplatte ein kreisrundes Loch ist, an welches ein Langloch mit kleinerem Durchmesser anschließt, welches in Richtung der der Sitzlehne des Sitzes abgewandten Seite verläuft. Bevorzugt verläuft das Langloch parallel zu der Längsseite des Adapters und steht bevorzugt senkrecht auf die Querseite des Adapters. Diese Befestigungsvorrichtungen können so auf einfache Art und Weise für viele Befestigungsmöglichkeiten genutzt werden. Es ist bevorzugt, dass eine äquivalente Adapterplatte mit befestigten Gegenständen schon im Labor oder außerhalb des Kraftfahrzeugs vorbereitet wird. Diese Adapterplatte weist auf ihrer Unterseite bevorzugt pilzförmige Vorsprünge auf, die in die kreisrunden Löcher der Befestigungsvorrichtungen eingeführt werden können. Danach liegt die Unterseite der Adapterplatte bevorzugt auf der Oberseite der Halteplatte auf und der schlanke Teil der pilzförmigen Vorsprünge kann in den Langlöchern zu ihrem geschlossenen Ende geführt werden, wodurch die Adapterplatte in den Befestigungsvorrichtungen an der Halteplatte gehalten wird.

Zudem ist es besonders bevorzugt, wenn das kreisrunde Loch in seinem Umfangsbereich zumindest teilweise von einer Pilzführung verstärkt wird, die auf der Unterseite der Halteplatte angebracht ist. Diese Pilzführung dient als einfacher Zentrieranschlag beim Entnehmen bzw. beim Abdocken der oben beschriebenen Adapterplatte.

Weiterhin ist es besonders bevorzugt, wenn der Adapter eine mehrteilige - bevorzugt eine zweiteilige - Sitzplatte umfasst, die in einem Abstand zur Halteplatte mit der Halteplatte fest verbunden ist, wobei die Sitzplatte zum Auflegen des Adapters auf die Sitzfläche des Fahrzeugsitzes vorgesehen ist. Hiermit ist eine flächige oder zumindest teilweise flächige Auflagefläche des Adapters auf dem Sitz gegeben, sodass das Gewicht des Adapters hier leichter auf den Sitz verteilt werden kann.

Des Weiteren ist es besonders bevorzugt, wenn der Abstand der Sitzplatte zur Halteplatte nicht konstant ist und der Abstand der Halteplatte zur Sitzplatte in die Richtung von der Sitzlehne weg abnimmt. Diese quasi negative Steigung der Halteplatte im Vergleich zur Sitzplatte sorgt dafür, dass auf einfache Art und Weise die Steigung der Sitzfläche zumindest im Wesentlichen ausgeglichen wird.

"Im Wesentlichen ausgeglichen" meint, dass die Halteplatte bei bestimmungsgemäßer Anbringung am Sitz bevorzugt parallel zum Aufstellgrund des Fahrzeugs ist, wobei hier eine Abweichung von höchstens +/- 10°, besonders bevorzugt von höchstens +/-5° zum Aufstellgrund akzeptabel ist.

Darüber hinaus ist es besonders bevorzugt, wenn der Adapter auf seinen beiden Längsseiten bevorzugt jeweils eine Versteifung als Abstandshalter zwischen Sitzplatte und Halteplatte aufweist und zudem im Bereich zwischen den beiden Längsseiten noch mindestens eine weitere, bevorzugt sogar mindestens zwei weitere Versteifungen aufweist. Diese Versteifungen tragen so auf einfache Art und Weise zur Stabilität des Adapters bei und bieten darüber hinaus noch die Möglichkeit, an ihnen die Gurtaufnahmen vorzusehen. So kann auf einfache Weise sowohl effektiv der Abstand zwischen den beiden Platten gewährleistet werden, als auch eine zusätzliche Versteifung und Stabilisierung des Adapters vorgenommen werden.

Eine weitere bevorzugte Ausführungsform des Adapters besteht darin, dass sich die erste Gurtaufnahme im Mittenbereich der Versteifungen befindet. Die erste Gurtaufnahme befindet sich somit bevorzugt verteilt auf mehrere Versteifungen. Der "Mittenbereich" liegt hierbei bevorzugt - in Längsrichtung der Versteifungen gesehen - in den mittleren 50 % der Länge der Versteifungen, besonders bevorzugt sogar in den mittleren 30 % der Länge der Versteifungen. Hierdurch können die Versteifungen zugleich auf einfache Art und Weise die Funktion der ersten Gurtaufnahme übernehmen und es ist kann genügend Platz zwischen der ersten und zweiten Gurtaufnahme vorgesehen werden, sodass eine gewünschte Haltewirkung des Kraftfahrzeuggurts realisiert werden kann.

Darüber hinaus ist es besonders bevorzugt, wenn die erste Gurtaufnahme durch kreisbogenförmige Ausschnitte in den Versteifungen gebildet wird, zu denen jeweils ein sich bevorzugt verengender Ausschnitt, bevorzugt ein dreieckiger Ausschnitt, hinführt. Der sich verengende Abschnitt wird hier als Einfädelhilfe des Kraftfahrzeuggurts verwendet, während der Kraftfahrzeuggurt bei bestimmungsgemäßer Montage dauerhaft in dem kreisbogenförmigen Ausschnitt aufliegt. Der kreisbogenförmige Ausschnitt führt dazu, dass der Gurt an keinen Stellen durch scharfe Kanten eventuell eingeschnitten wird und der Gurt kann sich zudem entlang des Ausschnittes ausbreiten und wird bevorzugt nicht zusammengeschoben.

Weiterhin ist es besonders bevorzugt, wenn sich die kreisbogenförmigen Ausschnitte der ersten Gurtaufnahme in einer Flucht befinden. Dies ist einerseits für die einfache Fertigung des Adapters von Vorteil, da so nur gleiche Versteifungen gefertigt werden müssen, und andererseits wird der Kraftfahrzeuggurt so nicht durch zueinander verschobene Ausschnitte verklemmt.

Eine weitere bevorzugte Ausführungsform besteht darin, dass sich die zweite Gurtaufnahme im Endbereich der Versteifungen befindet. Die zweite Gurtaufnahme befindet sich somit bevorzugt verteilt auf mehrere Versteifungen. Der "Endbereich" liegt hierbei bevorzugt - in Längsrichtung der Versteifungen gesehen - im letzten Drittel der Länge der Versteifungen, besonders bevorzugt sogar in den letzten 20 % der Länge der Versteifungen und absolut bevorzugt am freien Ende der Versteifungen, welches auf der der Sitzlehne abgewandten Seite liegt. Hierdurch können die Versteifungen zugleich auf einfache Art und Weise die Funktion der ersten Gurtaufnahme übernehmen und es kann genügend Platz zwischen der ersten und zweiten Gurtaufnahme vorgesehen werden, sodass eine gewünschte Haltewirkung des Kraftfahrzeuggurts realisiert werden kann.

Darüber hinaus ist es besonders bevorzugt, wenn die zweite Gurtaufnahme durch kreisabschnittsförmige Ausschnitte in den Versteifungen gebildet werden. Der Kraftfahrzeuggurt liegt somit bevorzugt auf dem kreisabschnittsförmigen Ausschnitt auf und wird sogar bevorzugt teilweise von diesem umgriffen. Der kreisabschnittsförmige Ausschnitt führt dazu, dass der Gurt an keinen Stellen durch scharfe Kanten eventuell eingeschnitten wird und der Gurt kann sich zudem entlang des Ausschnittes ausbreiten und wird bevorzugt nicht zusammengeschoben.

Weiterhin ist es besonders bevorzugt, wenn sich die kreisabschnittsförmigen Ausschnitte der zweiten Gurtaufnahme in einer Flucht befinden. Dies ist einerseits für die einfache Fertigung des Adapters von Vorteil, da so nur gleiche Versteifungen gefertigt werden müssen, und andererseits wird der Kraftfahrzeuggurt so nicht durch zueinander verschobene Ausschnitte verklemmt.

Darüber hinaus ist es besonders bevorzugt, wenn die Sitzplatte an seiner der Sitzlehne zugewandten Seite einen Vorsprung aufweist, welcher zumindest teilweise in die Ritze zwischen Sitzlehne und Sitzfläche eingeschoben werden kann. Dies stellt eine einfache Montagehilfe und zusätzliche Fixierung des Adapters am Sitz dar, wobei hierdurch eine Rotation bzw. ein Aufsteigen des Adapters verhindert oder weniger wahrscheinlich gemacht wird.

Zudem ist es besonders bevorzugt, wenn die Sitzplatte als zweiteiliges, ebenes Blechteil ausgeführt ist, welches im Bereich der ersten Gurtaufnahme unterbrochen ist. So kann auf einfache Art und Weise eine Lücke geschaffen werden, die die erste Gurtaufnahme freigibt und wodurch ein Einfädeln des Kraftfahrzeuggurts in diese erste Gurtaufnahme möglich ist.

Weiterhin ist es besonders bevorzugt, wenn die Verbindung eines Gegenstands mit der Befestigungsvorrichtung lösbar ist und insbesondere eine Schraubverbindung, eine Klemmvorrichtung oder eine Bajonettverbindung ist. Somit kann der Adapter auf einfache Art und Weise mit verschiedenen Gegenständen bestückt werden.

Weitere mögliche Ausgestaltungen, Funktionen und Vorteile ergeben sich aus den abhängigen Ansprüchen und/oder der nachfolgenden Beschreibung der beispielhaften Ausführungsform und/oder unter Bezugnahme auf die Figuren.

### EINE WEITERE DER ERFINDUNG ZUGRUNDE LIEGENDE AUFGABE

Darüber hinaus liegt der Erfindung die Aufgabe zugrunde, ein möglichst flexibles System zur Verfügung zu stellen, mit welchem Gegenstände, wie beispielsweise Messtechnik, schnell und einfach in dem Kraftfahrzeug montiert werden können.

### DIE WEITERE ERFINDUNGSGEMÄSSE LÖSUNG

Eine Lösung dieser Aufgabe wird durch den Anspruch 22 bereitgestellt.

Hier wird ein System vorgeschlagen, welches den erfindungsgemäßen Adapter, eine Adapterplatte, einen zusätzlichen Adapter zur Befestigung an einem Rücksitz des Fahrzeugs, bevorzugt eine Abstützung, und eine Halteplatte zur Anbringung im Kofferraum des Fahrzeugs umfasst.

Der Adapter zur Befestigung an dem Rücksitz ist in der noch nicht veröffentlichten Anmeldung 20 2024 103 585.2 beschrieben, welche vollumfänglich Teil dieser Offenbarung ist. Die entsprechende Anmeldung wird zusätzlich zu dieser Anmeldung als zusätzliches Dokument mit eingereicht.

Die Halteplatte zur Anbringung im Kofferraum des Fahrzeugs ist in der noch nicht veröffentlichten Anmeldung 20 2024 001 249.2 beschrieben, welche vollumfänglich Teil dieser Offenbarung ist. Die entsprechende Anmeldung wird zusätzlich zu dieser Anmeldung als zusätzliches Dokument mit eingereicht.

Das erfindungsgemäße System zeichnet sich dadurch aus, dass Messtechnik und/oder mit der Messtechnik in Verbindung stehende Komponenten bevorzugt vollumfänglich auf der Adapterplatte montiert wird bzw. werden. Die Adapterplatte wird bevorzugt über die pilzförmigen Vorsprünge der Adapterplatte, die in die entsprechend kooperierenden Befestigungsvorrichtungen eingreifen, montiert, wobei die Adapterplatte auf die gleiche Art und Weise auf der Halteplatte des erfindungsmäßen Adapters am Rücksitz montiert werden kann oder am Adapter des Beifahrersitzes montiert werden kann oder an der Halteplatte im Kofferraum montiert werden kann.

So kann auf einfache Art und Weise ein flexibles Befestigungssystem geschaffen werden, bei welchem die Messtechnik bzw. damit in Verbindung stehende Komponenten außerhalb des Kraftfahrzeugs, bevorzugt sogar schon im Labor, auf eine Adapterplatte montiert werden können. Im Fahrzeug sind dann bevorzugt schon ein Adapter am Beifahrersitz, mindestens ein Adapter auf einem der Rücksitze und/oder eine Halteplatte im Kofferraum montiert. Der Benutzer kann dann je nach Testsituation flexibel entscheiden, auf welches der aufnehmenden Teile die Adapterplatte montiert werden soll. Darüber hinaus ist die Montage und Demontage der Adapterplatte sehr einfach und schnell durchzuführen, bevorzugt ohne Werkzeug und nur durch das Aufsetzen und Verschieben der Adapterplatte.

Es sei hier betont, dass die Verbindung der Adapterplatte mit den aufnehmenden Teilen über die pilzförmigen Vorsprünge und den entsprechend aufnehmenden Bohrungen mit Langloch (Befestigungsbohrrichtungen) bevorzugt ist, jedoch auch andere Arten der Befestigung denkbar sind. Das Ziel der Befestigung ist eine leicht zu lösende und dennoch sichere Verbindung zu den aufnehmenden Teilen.

### FIGURENLISTE

Die Figur 1 zeigt einen erfindungsgemäßen Adapter in dreidimensionaler Ansicht von vorne.
Die Figur 2 zeigt den erfindungsgemäßen Adapter in dreidimensionaler Ansicht von hinten.
Die Figur 3 zeigt den erfindungsgemäßen Adapter in dreidimensionaler Ansicht in bestimmungsgemäß an einem Beifahrersitz mit Kraftfahrzeuggurt gesicherten Position; von der Beifahrerseite aus gesehen.
Die Figur 4 zeigt den erfindungsgemäßen Adapter in dreidimensionaler Ansicht in bestimmungsgemäß an einem Beifahrersitz mit Kraftfahrzeuggurt gesicherten Position; von der Fahrerseite aus gesehen.
Die Figur 5 zeigt eine Detailansicht der Rückseite des erfindungsgemäßen Adapters in dreidimensionaler Ansicht an der Ritze zwischen Sitzlehne und Sitzfläche.
Die Figur 6 zeigt den erfindungsgemäßen Adapter in dreidimensionaler Ansicht von unten.
Die Figur 7 zeigt den erfindungsgemäßen Adapter in dreidimensionaler Ansicht von vorne.
Die Figur 8 zeigt eine Pilzführung des erfindungsgemäßen Adapters in dreidimensionaler Ansicht.
Die Figur 9 zeigt eine Adapterplatte in dreidimensionaler Ansicht von unten.
Die Figur 10 zeigt eine Adapterplatte in dreidimensionaler Ansicht von oben.

### BEVORZUGTE AUSFÜHRUNGSFORM

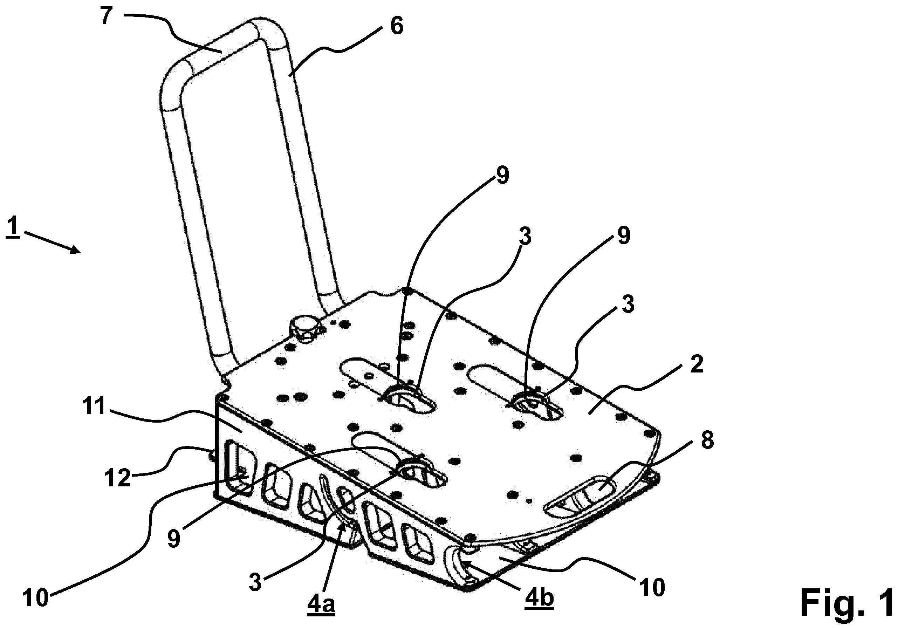

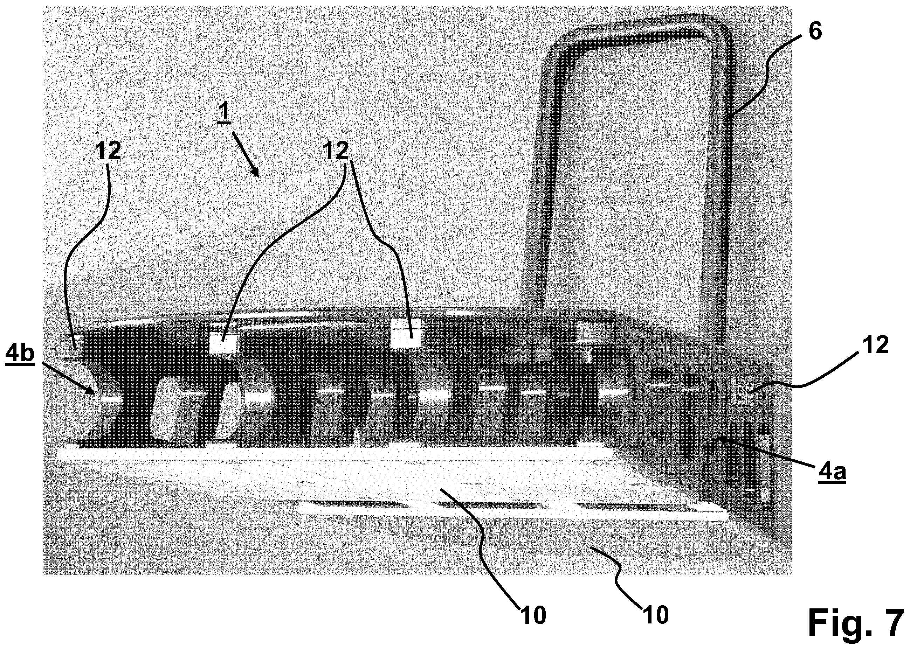

Die Fig. 1 bis Fig. 8 zeigen ein bevorzugtes Ausführungsbeispiel des Adapters 1 und der zugehörigen Bauteile.

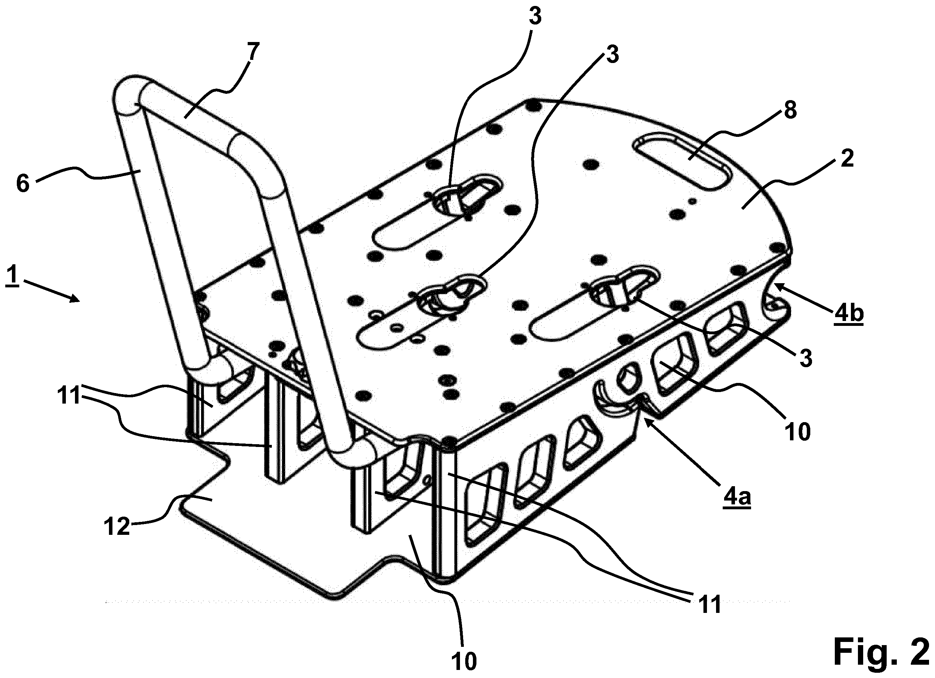

Fig. 1 und Fig. 2 zeigen den Adapter 1 zunächst im nicht am Sitz angebrachten Zustand. Der Adapter 1 umfasst hierbei eine Halteplatte 2 mit mindestens einer Befestigungsvorrichtung 3. Die Halteplatte 2 weist zudem bevorzugt an dem dem Sitz S abgewandten Ende einen Haltebügel 8 auf, der bevorzugt ein Ausschnitt in der Halteplatte 2 ist.

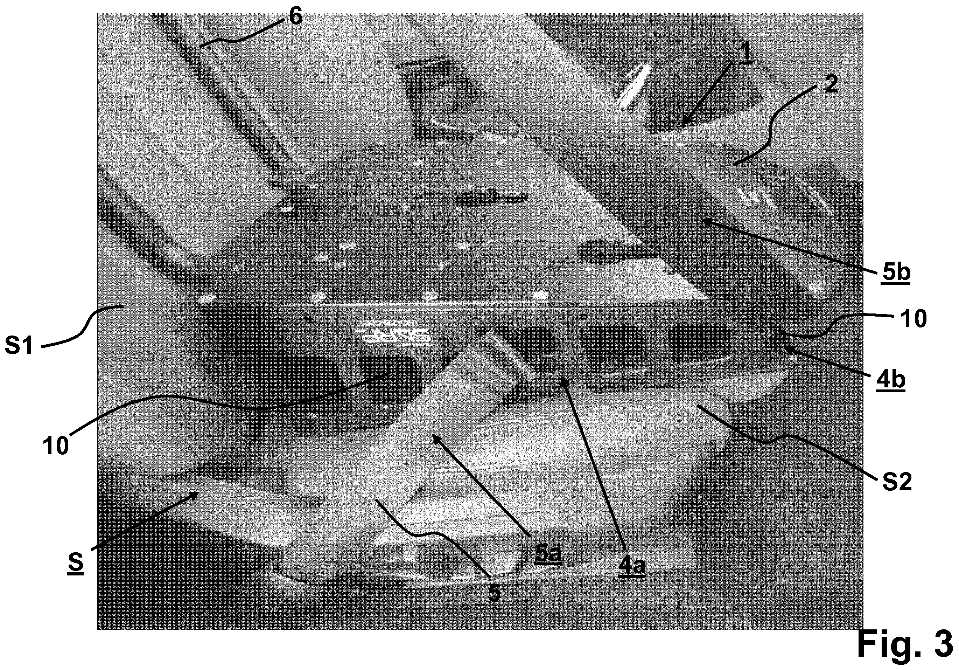

Auf der dem Sitz S zugewandten Seite trägt bevorzugt die Halteplatte 2 an ihrer Unterseite einen Stützbügel 6, welcher im am Sitz angebrachten Zustand gegen die Sitzlehne S1 drückt (siehe Fig. 3). Der Stützbügel 6 ist bevorzugt eine gebogene Rohrkonstruktion, wobei dessen beiden offenen Enden bevorzugt jeweils von einem Stützbügelhalter aufgenommen werden, der sich an der Unterseite der Halteplatte 2 befindet und in den Figuren nicht erkennbar ist. Der Stützbügel 6 umfasst hierbei bevorzugt auch einen Haltegriff 7.

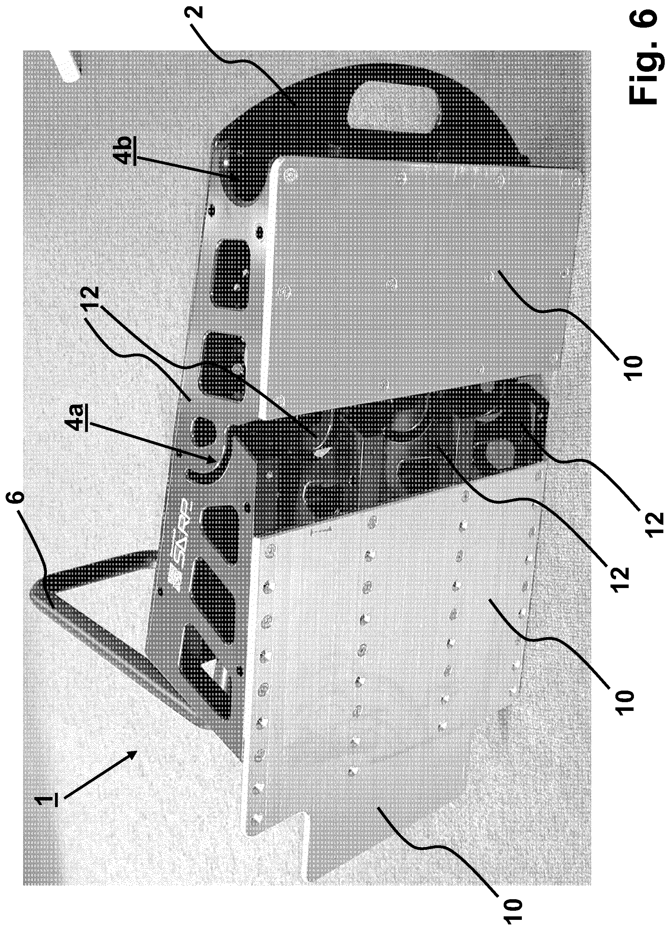

Die Sitzplatte 10 ist bevorzugt zweiteilig als ebenes Teil ausgeführt (siehe Fig. 6) und liegt im am Sitz angebrachten Zustand bevorzugt im Wesentlichen vollflächig auf der Sitzfläche S2 auf (siehe Fig. 3). Zwischen der Halteplatte 2 und der Sitzplatte 10 befinden sich Versteifungen 11 - im gezeigten Beispiel vier Versteifungen 11 **-,** welche die Gurtaufnahmen 4a und 4b tragen. Die erste Gurtaufnahme 4a wird von den kreisbogenförmigen Ausschnitten in den Versteifungen 11 gebildet. Die Versteifungen 11 weisen zudem über ihre gesamte Länge einige Ausschnitte auf, die vor allem zur Gewichtseinsparung dienen.

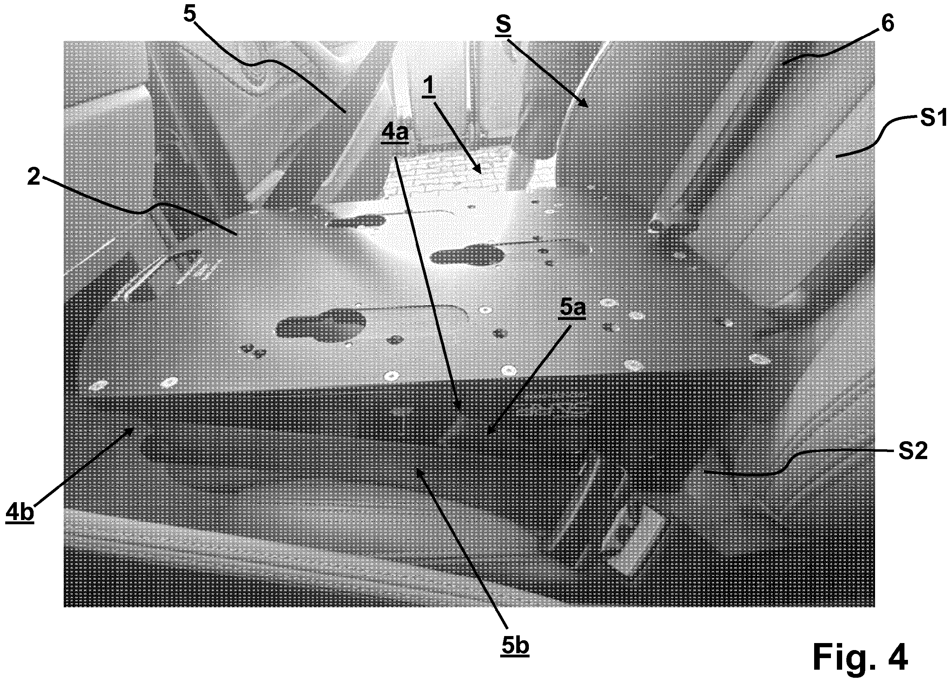

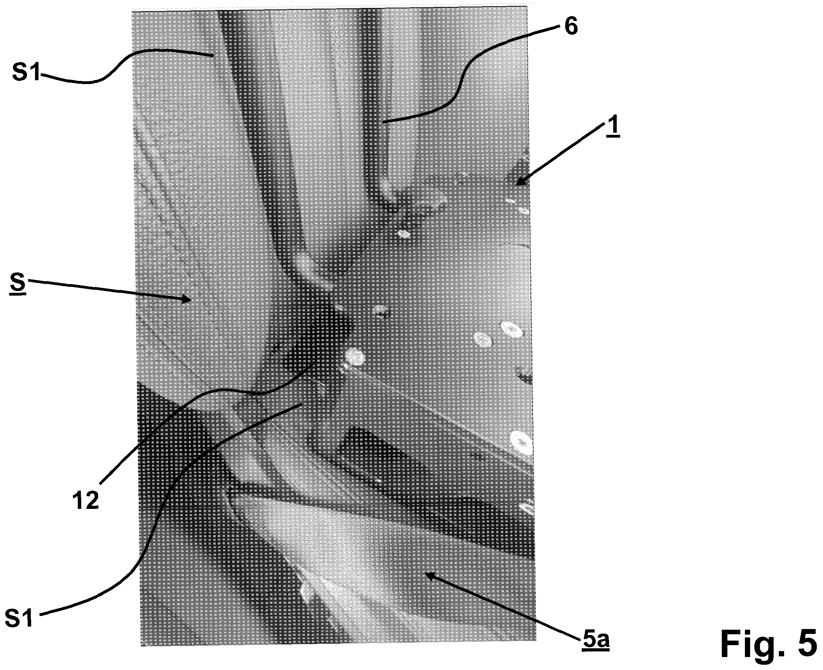

Fig. 3 und Fig. 4 zeigen den am Sitz angebrachten Zustand des Adapters 1, der wie oben beschrieben am Sitz S des Fahrzeugs angebracht wurde. Der Kraftfahrzeuggurt 5 ist ein serienmäßiger Dreipunkt-Sicherheitsgurt und der Adapter wurde auf dem Beifahrersitz montiert, was bevorzugt ist. Der Beckengurtabschnitt 5a wird hierbei von der ersten Gurtaufnahme 4a aufgenommen (siehe Fig. 3) und der Brustgurtabschnitt 5b wird von der zweiten Gurtaufnahme 4b aufgenommen (siehe Fig. 4). Die Sitzplatte 10 weist an ihrem der Sitzlehne S1 zugewandten Ende einen Vorsprung 12 auf, welcher in die Ritze zwischen Sitzlehne S1 und Sitzfläche S2 eingeführt wird (siehe Fig. 5).

Die bevorzugte Reihenfolge bei der Montage des Adapters 1 am Sitz S ist hierbei wie folgt: Zunächst sollte der Stützbügel 6 an die Sitzlehne S1 angedrückt werden und der Vorsprung 12 in die angesprochene Ritze eingeführt werden. Daraufhin sollte der Sitz komplett nach hinten verschoben werden, um ein Montieren des Kraftfahrzeuggurts 5 zu erleichtern. Daraufhin kann der Beckengurtabschnitt 5a in die erste Gurtaufnahme 4a eingefädelt und durch diese hindurch gezogen werden. Daraufhin kann die Schlosszunge in das Gurtschloss eingerastet werden. Im nächsten Schritt wird dann bevorzugt der Brustgurtabschnitt 5b um die zweite Gurtaufnahme 4b herumgezogen und vorne herum verlegt. Durch kräftiges Ziehen am Kraftfahrzeuggurt 5 kann zudem ein Vorspannen vorgenommen werden.

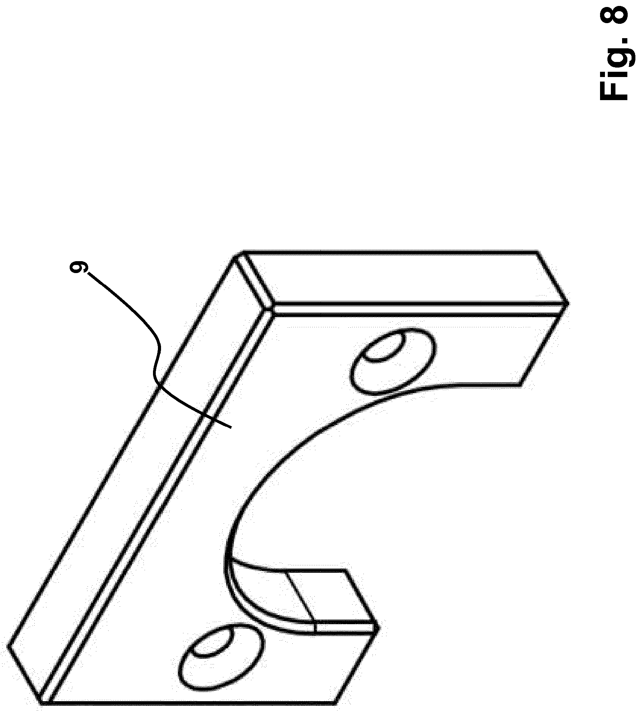

In Fig. 1 sind zudem noch Pilzführungen 9 (siehe auch Fig. 8) zu erkennen. Hier wird die Pilzführung 9 bevorzugt unterhalb der Halteplatte 2 (in Richtung der Sitzplatte 10 zeigend) angebracht und weist bevorzugt den gleichen Radius auf wie der Radius der entsprechenden größten Bohrung der Befestigungsvorrichtung 3. Diese Pilzführung 9 dient als einfacher Zentrieranschlag, beim Entnehmen bzw. beim Abdocken der oben beschriebenen Adapterplatte 13.

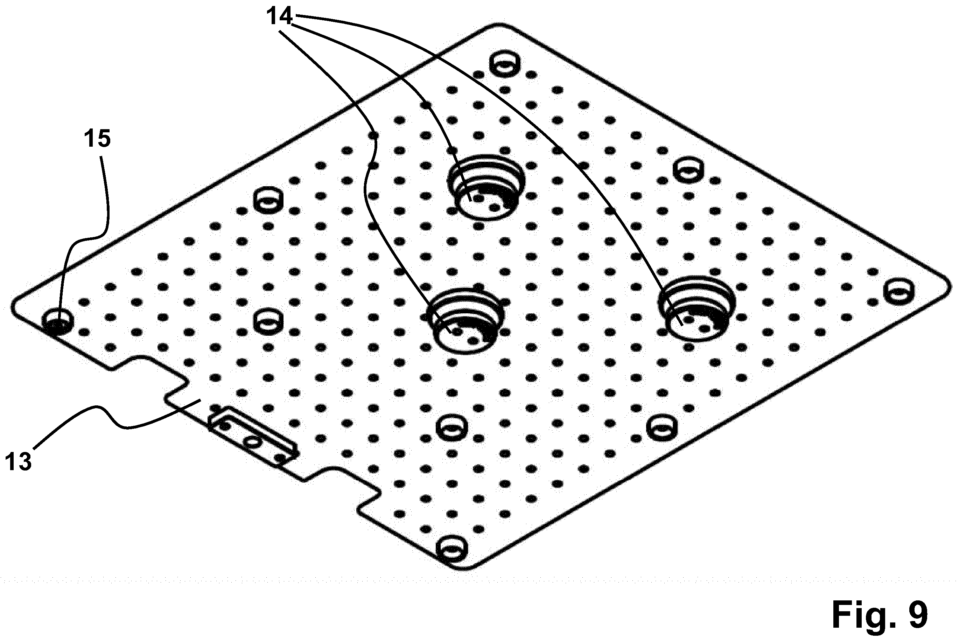

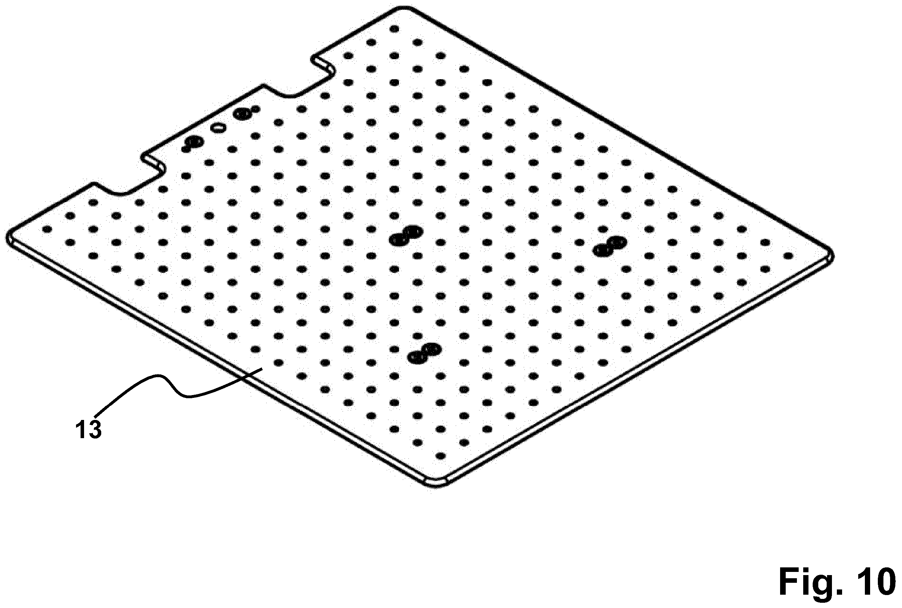

Die Befestigungsvorrichtungen 3 in der Halteplatte umfassen bevorzugt ein kreisrundes Loch, an welches ein Langloch mit kleinerem Durchmesser anschließt, welches in Richtung der der Sitzlehne des Sitzes abgewandten Seite verläuft. Bevorzugt verläuft das Langloch parallel zu der Längsseite des Adapters 1 und steht bevorzugt senkrecht auf die Querseite des Adapters 1. Diese Befestigungsvorrichtungen 3 können so auf einfache Art und Weise für viele Befestigungsmöglichkeiten genutzt werden. Es ist bevorzugt, dass eine äquivalente Adapterplatte 13 (siehe Fig. 9 und Fig. 10) mit befestigten Gegenständen schon im Labor oder außerhalb des Kraftfahrzeugs vorbereitet wird. Hierfür weist die Adapterplatte 13 bevorzugt eine Vielzahl an Bohrungen auf, die zum Anbringen der verschiedensten Gegenstände genutzt werden können.

Diese Adapterplatte 13 weist auf ihrer Unterseite bevorzugt pilzförmige Vorsprünge 14 auf, die in die kreisrunden Löcher der Befestigungsvorrichtungen 3 eingeführt werden können. Dementsprechend müssen die pilzförmigen Vorsprünge 14 äquivalent zu den Befestigungsvorrichtungen 3 in der Halteplatte 2 verteilt sein. Danach liegt die Unterseite der Adapterplatte 13 bevorzugt auf der Oberseite der Halteplatte 2 auf oder mit Abstandshaltern 15 von dieser distanziert, und der schlanke Teil der pilzförmigen Vorsprünge 14 kann in den Langlöchern zu ihrem geschlossenen Ende geführt werden, wodurch die Adapterplatte 13 in den Befestigungsvorrichtungen 3 an der Halteplatte gehalten wird.

Wie oben erwähnt, ist es bevorzugt, wenn das kreisrunde Loch in seinem Umfangsbereich zumindest teilweise von einer Pilzführung 9 verstärkt wird, die auf der Unterseite der Halteplatte 2 angebracht ist. Diese Pilzführung 9 dient als einfacher Zentrieranschlag, beim Entnehmen bzw. beim Abdocken der oben beschriebenen Adapterplatte 1.

### REFERENZLISTE

- 1: Adapter
- 2: Halteplatte
- 3: Befestigungsvorrichtung
- 4a: Erste Gurtaufnahme
- 4b: Zweite Gurtaufnahme
- 5: Kraftfahrzeuggurt
- 5a: Beckengurtabschnitt
- 5b: Brustgurtabschnitt
- 6: Stützbügel
- 7: Haltegriff des Stützbügels
- 8: Haltebügel
- 9: Pilzführung
- 10: Sitzplatte
- 11: Versteifung
- 12: Vorsprung
- 13: Adapterplatte
- 14: Pilzförmige Vorsprünge
- 15: Abstandshalter

- S: Sitz
- S1: Sitzlehne
- S2: Sitzfläche

## Patentansprüche

1. Adapter (1) zur bestimmungsgemäßen Anbringung an einem Sitz (S) eines Kraftfahrzeugs, mit einer Halteplatte (2), wobei an der Halteplatte (2) mindestens eine Befestigungsvorrichtung (3) zum Befestigen eines Gegenstands am Adapter (1) angeordnet ist, **dadurch gekennzeichnet, dass** der Adapter (1) jeweils eine erste Gurtaufnahme (4a) und eine zweite Gurtaufnahme (4b) umfasst, wobei jeweils eine Gurtaufnahme teilweise den Beckengurtabschnitt (5a) und die jeweils andere Gurtaufnahme teilweise den Brustgurtabschnitt (5b) eines Kraftfahrzeuggurts (5) aufnimmt.

2. Adapter (1) nach Anspruch 1, **dadurch gekennzeichnet, dass** der Adapter (1) auf seiner der Sitzlehne (S1) des Sitzes (S) zugewandten Seite einen Stützbügel (6) zur zusätzlichen Abstützung des Adapters (1) gegen eine Sitzlehne (S1) umfasst.

3. Adapter (1) nach Anspruch 2, **dadurch gekennzeichnet, dass** der Stützbügel (6) einen Haltegriff (7) zum Halten des Adapters (1) umfasst.

4. Adapter (1) nach einem der vorhergehenden Ansprüche, **dadurch gekennzeichnet, dass** der Adapter (1) auf seiner der Sitzlehne (S1) des Sitzes (S) abgewandten Seite einen Haltebügel (8) zum Halten des Adapters (1) umfasst.

5. Adapter (1) nach Anspruch 4, **dadurch gekennzeichnet, dass** der Haltebügel (8) durch einen Ausschnitt in der Halteplatte (2) gebildet wird.

6. Adapter (1) nach einem der vorhergehenden Ansprüche, **dadurch gekennzeichnet, dass** eine jeweilige Befestigungsvorrichtung (3) der Halteplatte (2) ein kreisrundes Loch ist, an welches ein Langloch mit kleinerem Durchmesser anschließt, welches in Richtung der der Sitzlehne (S1) des Sitzes (S) abgewandten Seite verläuft.

7. Adapter (1) nach Anspruch 6, **dadurch gekennzeichnet, dass** das kreisrunde Loch in seinem Umfangsbereich zumindest teilweise von einer Pilzführung (9) verstärkt wird, die auf der Unterseite der Halteplatte (2) angebracht ist.

8. Adapter (1) nach einem der vorhergehenden Ansprüche, **dadurch gekennzeichnet, dass** der Adapter (1) eine mehrteilige Sitzplatte (10) umfasst, die in einem Abstand zur Halteplatte (2) mit der Halteplatte (2) fest verbunden ist, wobei die Sitzplatte (10) zum Auflegen des Adapters (1) auf die Sitzfläche (S2) des Fahrzeugsitzes (S) vorgesehen ist.

9. Adapter (1) nach Anspruch 1, **dadurch gekennzeichnet, dass** der Abstand der Sitzplatte (10) zur Halteplatte (2) nicht konstant ist und der Abstand der Halteplatte (2) zur Sitzplatte (10) in die Richtung von der Sitzlehne (S1) weg abnimmt, sodass die Steigung der Sitzfläche (S2) zumindest im Wesentlichen ausgeglichen wird.

10. Adapter (1) nach einem der vorhergehenden Ansprüche, **dadurch gekennzeichnet, dass** der Adapter (1) auf seinen beiden Längsseiten bevorzugt jeweils eine Versteifung (11) als Abstandshalter zwischen Sitzplatte (10) und Halteplatte (2) aufweist und zudem im Bereich zwischen den beiden Längsseiten noch mindestens eine weitere, bevorzugt sogar mindestens zwei weitere Versteifungen (11) aufweist.

11. Adapter (1) nach einem der vorhergehenden Ansprüche, **dadurch gekennzeichnet, dass** sich die erste Gurtaufnahme (4a) im Mittenbereich der Versteifungen (11) befindet.

12. Adapter (1) nach einem der vorhergehenden Ansprüche, **dadurch gekennzeichnet, dass** die erste Gurtaufnahme (4a) durch kreisbogenförmige Ausschnitte in den Versteifungen (11) gebildet wird, zu denen jeweils ein sich bevorzugt verengender Ausschnitt, bevorzugt ein dreieckiger Ausschnitt, hinführt.

13. Adapter (1) nach einem der vorhergehenden Ansprüche, **dadurch gekennzeichnet, dass** sich die kreisbogenförmigen Ausschnitte der ersten Gurtaufnahme (4a) in einer Flucht befinden.

14. Adapter (1) nach einem der vorhergehenden Ansprüche, **dadurch gekennzeichnet, dass** sich die zweite Gurtaufnahme (4b) im Endbereich der Versteifungen (11) befindet.

15. Adapter (1) nach einem der vorhergehenden Ansprüche, **dadurch gekennzeichnet, dass** die zweite Gurtaufnahme (4b) durch kreisabschnittsförmige Ausschnitte in den Versteifungen (11) gebildet werden.

16. Adapter (1) nach einem der vorhergehenden Ansprüche, **dadurch gekennzeichnet, dass** sich die kreisabschnittsförmigen Ausschnitte der zweiten Gurtaufnahme (4b) in einer Flucht befinden.

17. Adapter (1) nach einem der vorhergehenden Ansprüche, **dadurch gekennzeichnet, dass** die Sitzplatte (10) an ihrer der Sitzlehne (S1) zugewandten Seite einen Vorsprung (12) aufweist, welcher zumindest teilweise in die Ritze zwischen Sitzlehne (S1) und Sitzfläche (S2) eingeschoben werden kann.

18. Adapter (1) nach einem der vorhergehenden Ansprüche, **dadurch gekennzeichnet, dass** die Sitzplatte (10) als zweiteiliges, ebenes Blechteil ausgeführt ist, welches im Bereich der ersten Gurtaufnahme (4a) unterbrochen ist.

19. Adapter (1) nach einem der vorhergehenden Ansprüche, **dadurch gekennzeichnet, dass** die Verbindung eines Gegenstands mit der Befestigungsvorrichtung (3) lösbar ist und insbesondere eine Schraubverbindung, eine Klemmvorrichtung oder eine Bajonettverbindung ist.

20. Adapterplatte (13) in Gestalt einer ebenen Platte mit Bohrungen, **dadurch gekennzeichnet, dass** an der Unterseite der Platte pilzförmige Vorsprünge (14) nach unten herausragen.

21. System umfassend einen Adapter (1) und eine Adapterplatte (13), **dadurch gekennzeichnet, dass** Messtechnik und/oder mit der Messtechnik in Verbindung stehende Komponenten auf der Adapterplatte (19) montiert werden, welche über die pilzförmigen Vorsprünge (14) und die entsprechenden Befestigungsvorrichtungen (3) an der Halteplatte (2) montiert wird.

22. System umfassend einen Adapter (1), eine Adapterplatte (13), einen Adapter zur Befestigung an einem Rücksitz des Fahrzeugs, bevorzugt mit einer zusätzlichen Abstützung, und einer Halteplatte zur Anbringung im Kofferraum des Fahrzeugs, **dadurch gekennzeichnet, dass** Messtechnik und/oder mit der Messtechnik in Verbindung stehende Komponenten auf der Adapterplatte (13) montiert werden, welche über die pilzförmigen Vorsprünge (14) und die entsprechenden Befestigungsvorrichtungen (3) entweder an der Halteplatte (2) des Adapters (1) montiert werden kann oder auf ebenjene Weise am Adapter des Rücksitzes montiert werden kann oder auf ebenjene Weise an der Halteplatte im Kofferraum montiert werden kann.
